(19)

**Europäisches Patentamt**
**European Patent Office**
**Office européen des brevets**

(11) **EP 3 327 996 B1**

(12) **EUROPEAN PATENT SPECIFICATION**

(45) Date of publication and mention
of the grant of the patent:
**08.01.2025 Bulletin 2025/02**

(21) Application number: **17203405.0**

(22) Date of filing: **23.11.2017**

(51) International Patent Classification (IPC):
*H04L 47/11* *(2022.01)*    *H04L 47/28* *(2022.01)*
*H04L 47/25* *(2022.01)*    *H04L 43/08* *(2022.01)*

(52) Cooperative Patent Classification (CPC):
**H04L 47/11; H04L 43/0876; H04L 43/106;**
**H04L 47/25; H04L 47/283;** H04L 43/16

(54) **METHOD AND RECEIVER FOR CONGESTION DETECTION**

VERFAHREN UND EMPFÄNGER ZUR ÜBERLASTUNGSERKENNUNG

PROCÉDÉ ET RÉCEPTEUR DE DÉTECTION DE CONGESTION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **24.11.2016 FR 1661442**

(43) Date of publication of application:
**30.05.2018 Bulletin 2018/22**

(73) Proprietor: **Belledonne Communications**
**38100 Grenoble (FR)**

(72) Inventors:
• **MORLAT, Simon**
  **38100 GRENOBLE (FR)**
• **PELLOUX-PRAYER, Gautier**
  **26260 CLERIEUX (FR)**

(74) Representative: **Cabinet Beaumont**
**4, Place Robert Schuman**
**B.P. 1529**
**38025 Grenoble Cedex 1 (FR)**

(56) References cited:
**WO-A1-2012/074442    FR-A1- 2 899 049**
**US-A1- 2007 223 459**

**Description**

## FIELD

The present disclosure relates to the field of packet communications, and in particular to a receiver-based method for adapting the bitrate of a realtime media transmission to available network bandwidth based on network congestion detection.

## BACKGROUND

Voice over IP (Internet Protocol) corresponds to technologies that permit audio streams to be transmitted over IP networks, such as the internet. Similar technologies can be used to transmit video streams. The audio and/or video streams are transmitted as packets using a transport layer protocol such as RTP (realtime transport protocol), and may pass through various transmission mediums, such as wired or wireless connections, and through network hardware such as routers.

Network congestion occurs when one or more elements in the network, such as one or more routers, receive a higher bitrate than they are capable of handling. This leads to packets being queued then dropped, and degrading the quality of the transmitted audio and/or video stream. Once network congestion has been identified, a solution for improving performance is to reduce the packet transmission bitrate over the network, thereby reducing packet loss.

However, there is a technical difficulty in detecting the presence of congestion in a network. Indeed, a relatively high level of lost packets itself is not a good indication of congestion as there can be other reasons for packets being lost, such as the wireless network interfaces, and Ethernet packet collisions. In such a case, reducing the transmission rate will not improve the packet loss rate. Furthermore, depending on the bitrate of streams being transmitted and the design of a router through which the streams pass, the router may retain packets for several tenths of a second before deciding to transmit them or to drop them. Thus the occurrence of lost packets is a very belated symptom of congestion.

There is thus a need in the art for a method and circuit for detecting network congestion.

## SUMMARY

French patent application published as FR2899049 relates to a synchronisation source for transmitting synchronisation information by a packet network.

International patent application published as WO2012/074442 relates to a method and arrangement for employing media layer adaptation in a wireless communication of media in data packets from a sending node to a receiving node.

It is an aim of embodiments of the present description to at least partially address one or more problems in the prior art.

According to one aspect, there is provided a method for detecting congestion in a packet-switched network comprising: estimating, by a receiver, a transmission clock rate of one or more packets of a media stream received by the receiver, each packet comprising a timestamp generated based on the transmission clock rate, the transmission clock rate being estimated based on the timing of a plurality n of received packets and the timestamps associated with said n packets and estimating the transmission clock rate comprises estimating a clock rate ratio between the transmission clock rate and the clock rate at the receiver based on the following model of the reception time $t_k$ of a packet k:

$$T_k = Ce.t_k + Oe$$

where $T_k$ is the clock used to generate the timestamp, and Oe is an estimate of an origin value of the timestamps, and the reception time $t_k$ is predicted using an adaptive filtering technique based on a recursive least squares algorithm or on a Kalman filter algorithm; comparing the estimated transmission clock rate with a threshold; and detecting congestion in the network based on said comparison.

According to one embodiment, estimating the transmission clock rate is performed in response to the reception of each packet of the media stream received by the receiver.

According to one embodiment, the threshold is a fixed level.

According to one embodiment, the threshold is calculated based on an average of a plurality of previous estimates of the transmission clock rate.

According to one embodiment, the method further comprises, in response to detecting congestion: estimating available bandwidth based on at least a detected bitrate of the media stream; and transmitting a first bitrate limitation request to a transmitter transmitting the media stream to request that the transmission bitrate is reduced.

According to one embodiment, the first bitrate limitation request is to reduce the bitrate to a level of between 15 and 40 percent lower than the estimated available bandwidth.

According to one embodiment, the method further comprises: calculating, by the receiver, a new estimate of the transmission clock rate based on one or more further packets received after transmission of the first bitrate limitation request; and determining from the new estimate that the network is no longer congested, and in response transmitting to the transmitter a second bitrate limitation request.

According to one embodiment, the second bitrate limitation request is to increase the bitrate to a level of between 2 and 10 percent lower than the estimated available bandwidth.

According to a further aspect, there is provided a receiver for receiving a media stream transmitted over a packet-switched network, the receiver being configured to: estimate a transmission clock rate of one or more packets of a media stream received by the receiver, each packet comprising a timestamp generated based on the transmission clock rate, the transmission clock rate being estimated based on the timing of a plurality n of received packets and the timestamps associated with said n packets and the receiver is configured to estimate the transmission clock rate by estimating a clock rate ratio between the transmission clock rate and the clock rate at the receiver based on the following model of the reception time $t_k$ of a packet k:

$$T_k = Ce.t_k + Oe$$

where $T_k$ is the clock used to generate the timestamp, and Oe is an estimate of an origin value of the timestamps, and the reception time $t_k$ is predicted using an adaptive filtering technique based on a recursive least squares algorithm or on a Kalman filter algorithm; compare the estimated transmission clock rate with a threshold; and detect congestion in the network based on said comparison.

## BRIEF DESCRIPTION OF THE DRAWINGS

The foregoing and other features and advantages will become apparent from the following detailed description of embodiments, given by way of illustration and not limitation with reference to the accompanying drawings, in which:

Figure 1 schematically illustrates a packet transmission system according to an example embodiment;
Figure 2 schematically illustrates a receiver of Figure 1 in more detail according to an example embodiment;
Figure 3 schematically illustrates a transmitter of Figure 1 in more detail according to an example embodiment;
Figure 4 is a flow diagram illustrating operations in a method of estimating clock parameters according to an example embodiment;
Figure 5A is a graph illustrating an example of timestamps of arriving packets against the local receiver time according to an example embodiment;
Figure 5B is a graph illustrating an example of transmission clock rate estimates against local transmission time according to an example embodiment;
Figure 6 is a flow diagram illustrating operations in a method of detecting and stopping network congestion according to an example embodiment; and
Figure 7 is a state diagram representing states of a rate control module of the receiver of Figure 2 according to an example embodiment.

## DETAILED DESCRIPTION

Throughout the following description, example embodiments are described based on packet transmission using RTP Realtime Transport Protocol), for example defined in the standard IETF RFC3550. However, it will be apparent to those skilled in the art that the techniques described herein could be applied to other packet transmission protocols. The term "around" is used herein to designate a range of +/- 10 percent of the value in question.

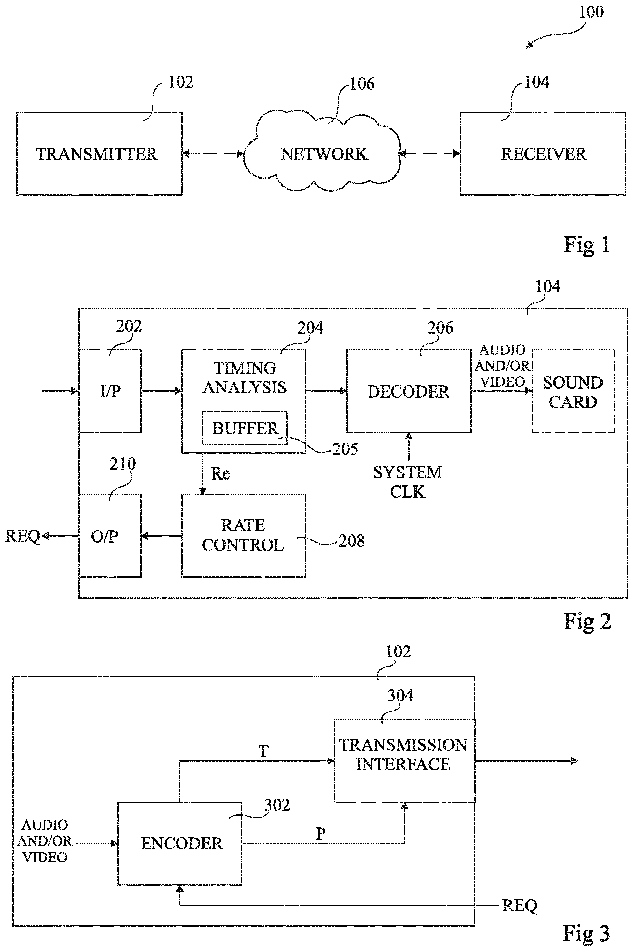

Figure 1 schematically illustrates a packet transmission system 100 according to an example embodiment. The system 100 comprises a transmitter (TRANSMITTER) 102 and a receiver (RECEIVER) 104 coupled via a network (NETWORK) 106 represented by a cloud. The transmitter 102 is capable of transmitting an audio and/or video stream to the receiver 104 via the network 106. Throughout the following description, the term "media stream" will be used to designate a stream comprising packets of audio and/or video data. Of course, the transmitter 102 may also be capable of receiving a media stream from the receiver 104, but for ease of description, communications in only one direction will be described herein.

The transmitter 102 and receiver 104 are each for example communications devices, such as mobile telephones, smart phones, tablet or laptop computers, or the like, adapted to communicate with the network 106 via one or more wired or wireless links. Alternatively, each of the transmitter 102 and receiver 104 could be a laptop computer or personal computer (PC) coupled to the network 106 via a wired network such as a LAN (local area network) or via a wireless network such as a wireless LAN.

The network 106 is for example a packet-switched network, for example comprising the internet, and includes routers for directing packets through the network, as known by those skilled in the art.

In some embodiments, the transmitter 102 is adapted to transmit the media stream to the receiver 104 in the form of packets using a transport layer protocol such as RTP. The effective transmission bitrate, in other words the rate at which data is successfully transmitted over the network, is a function of the transmission bitrate, the latency between the end points, and the packet loss rate.

Figure 2 schematically illustrates part of the receiver 104 of Figure 1 in more detail according to an example embodiment. The receiver 104 for example comprises an input interface (I/P) 202 for receiving packets from the network 106, and for providing suitable demodulation and conversion, depending on the particular transmission interface via which the packets are received.

An output of the input interface 202 is coupled to a timing analysis module (TIMING ANALYSIS) 204, which for example provides estimates Re of a transmission clock rate of the transmitted data, as described in more detail below. The transmission clock rate for example corresponds to the rate at which a timestamp of each packet is incremented. The transmission clock rate is thus not the same as the transmission bitrate, the latter being a measure of the quantity of data transmitted by the receiver during a given period, which can for example be adjusted by varying the level of compression of the audio or video stream. In some embodiments, the module 204 also provides estimates Oe of an origin of timestamps of the data packets. The module 204 for example comprises a buffer (BUFFER) 205 for buffering the received data packets.

Each data packet for example comprises a header including a timestamp, which is for example an RTP timestamp. The RTP protocol is for example described in more detail in the publication by H. Schulzrinne et al. entitled "RTP: A Transport Protocol for Real-Time Applications", the internet society (2003), the contents of which is for example incorporated herein to the extent permitted by the law. The timestamp is for example a 32 bit value, and for example indicates the value of the RTP clock at the sampling instant of a first sample in the RTP data packet.

For example, it is assumed that the timestamp T of each packet transmitted by the transmitter 102 is defined as follows:

$$T = O + R*t \qquad\qquad \sim 1$$

where O is the origin of the timestamps, which is for example initiated at a random value, and is then constant during a given media transmission, R is the transmission clock rate, for example equal to the RTP clock rate associated with the media stream, and t is the media time, for example corresponding to the clock count of the transmitter 102, or the system time used during the generation of video packets. As a typical example, the RTP clock rate, and thus the transmission clock rate, for a video stream defined in 1/90 000 of a second, and for an audio stream is equal to the audio sampling rate, which is for example equal to 8 kHz, although many other values would be possible. As an example, a first packet of an audio stream could have a timestamp equal to the origin O, and may contain 160 samples. A subsequent packet of the audio stream would then have a timestamp equal to O+160.

On the receiver side, expression 1 above still holds, except the origin O is unknown, and while the theoretical value of the transmission clock rate R is known, in practise this value can be shifted slightly with respect the theoretical value. Indeed, the receiver 104 is generally distant from the transmitter 102, and may not be precisely synchronized by external mechanisms such as the NTP (network time protocol) or by a GPS (global positioning system) device. In the case of audio streams, the time reference used for the transmission is the one employed by the sampling device, such as the analog to digital converter of the transmitter 102, whose actual sampling rate may differ slightly, as a result of hardware manufacturing constraints, from the sampling rate of the rendering device, such as the digital to analog converter of the receiver 104. This results in clock skew between the transmitter 102 and the receiver 104, which is generally under five percent, but which should generally be taken into account by the receiver 104 in order to ensure correct playback.

The receiver 104 for example observes RTP packets arriving at timestamps T according to the following model:

$$T = Oe + Re*t,$$

where Oe is the estimate of the origin O of the timestamps in expression 1 above, Re is the estimate of the transmitter's transmission clock rate R in expression 1 above, and t is the local media time at the receiver.

For example, the timing analysis module 204 is configured to estimate the transmission clock rate Re based on timing data associated with one or more received packets. For example, the timing analysis module estimates the transmission clock rate Re based on the local media time t at the receiver 104, and the timestamp of a plurality of received packets. As one example not covered by the appended claims, a relatively approximate estimation could be achieved based on a packet having a timestamp T1 received at a time t1 and a packet having a timestamp T2 received at a time t2, by computing (T1-T2)/(t1-t2). The timing analysis module 204 for example assumes a linear relationship between the local receiver media time t and the timestamps of the received packets.

The values of Re and Oe are for example updated in response to the reception of each new packet. Furthermore, so that the transmission clock rate estimates fall significantly when network congestion occurs, the calculation of the estimate for example involves a "forgetting factor", such that the timing data associated with older packets is either not considered or it is given less weight. For example, the estimate is calculated based on the timing data of a limited number of the latest packets received. Alternatively, calculating the estimate involves weighting timing data associated with more recent packets with a higher weight than the timing data associated with older packets.

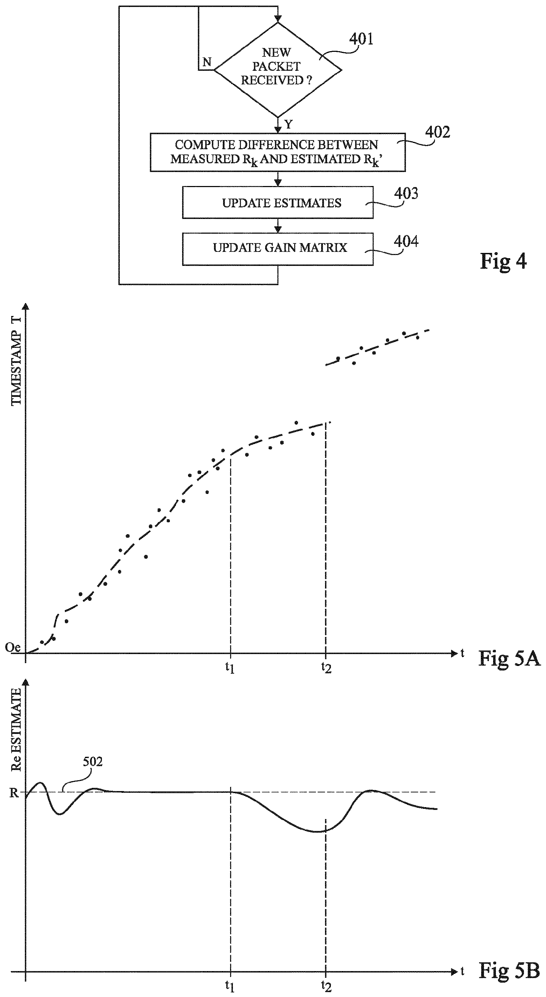

Of course, while, in a non-claimed embodiment, the transmission clock rate estimate is an estimate Re of the transmission clock rate at the transmitter, according to the embodiments of the present disclosure, the transmission clock rate estimate is represented in the form of a ratio Ce between the clock rates of the transmission and reception clocks. An example of a method of estimating the ratio Ce between the clock rates of the transmission and reception clocks will be described in more detail below with reference to Figure 4.

Referring again to Figure 2, the data packets are for example provided from the module 204 to a decoder (DECODER) 206. The decoder 206 decodes, using a system clock (SYSTEM CLK), the audio and/or video packets based on the particular audio and/or video compression standard applied to the media stream, and generates a decoded audio and/or video stream. In some embodiments, the audio stream is processed by a sound card (SOUND CARD) .

As illustrated in Figure 2, the timing analysis module 204 for example provides the estimates Re of the transmission clock rate of the packets to a rate control circuit (RATE CONTROL) 208.

The rate control circuit 208 is for example adapted to detect when congestion occurs in the network based at least on the estimates Re. In some embodiments, if network congestion is detected, the rate control circuit 208 is adapted to generate and transmit to the transmitter 102, via an output interface (O/P) 210, one or more bitrate requests (REQ) defining a maximum transmission bitrate to be used for the transmission of future packets in order to stop the congestion. For example, the request is for the transmitter to reduce its maximum transmission bitrate by between 5 and 50 percent.

While the timing analysis module 204, the decoder 206, and the rate control circuit 208 have been illustrated as separate hardware circuits in Figure 2, it will be apparent to those skilled in the art that one or more of these blocks could be implemented in software by instructions executed by a processing device.

Figure 3 schematically illustrates the transmitter 102 of Figure 1 in more detail according to an example embodiment. As illustrated, the transmitter 102 for example comprises an encoder (ENCODER) 302, which receives an audio and/or video stream (AUDIO AND/OR VIDEO). For example, the audio and/or video streams may be captured by a microphone and/or video camera of or coupled to the transmitter 102 (not illustrated in the figures). The encoder 302 for example encodes the audio and/or video streams to generate media packets P.

The media packets P are for example provided to a transmission interface (TRANSMISSION INTERFACE) 304, which transmits the media packets to the receiver 104 of Figure 1.

The encoder 302 for example receives the request signal (REQ) from the receiver indicating a maximum transmission bitrate to be used for the encoded audio and/or video streams, and adjusts the bitrate accordingly. For example, in the case of an audio stream, the encoder 302 decreases the transmission bitrate by applying a stronger compression to the raw audio stream, and increases the transmission bitrate by applying a weaker compression to the raw audio stream. For example, the encoder 302 uses a variable bitrate audio codec, such as the Opus codec, standardized by the Internet Engineering Task Force (IETF) as RFC 6716, or the AMR (adaptive multi rate) codec based on the ITU (international telecommunication union) standard. In the case of a video stream, the encoder 302 for example adjusts the transmission bitrate by modifying the quality factor applied during the video encoding, or by increasing or decreasing the frame rate and/or the image resolution.

Figure 4 is a flow diagram representing operations in a method of estimating the origin Oe of the timestamps and clock rate ratio Ce between the transmission and reception clock rates according to an example embodiment. These operations are for example performed by a processing device of the timing analysis circuit 204. The ratio Ce for example corresponds to Re/Trec, where Trec is the clock rate at the receiver.

In an operation 401, it is determined whether a new packet has been received. When a packet is received, operations 402 to 404 are performed to estimate the parameters Ce and Oe. This method is for example an iterative method, each iteration corresponding to a new packet. The method converges to relatively precise estimates of Ce and Oe after several iterations.

The estimation of the parameters Ce and Oe for example uses an RLS algorithm based on the Kalman algorithm, applied to a model y(k) that assumes an ideal transmission. The RLS algorithm is for example based on a model y of the form:

$$y(k) = \varphi^T(k)\theta$$

where θ is an unknown parameters vector, and $\varphi^T(k)$ is a regressions vector. The RLS algorithm can be expressed as follows:

$$\forall k > 1, \theta(k) = \theta(k-1) + P(k)\varphi(k)\big(y(k) - \varphi^T(k)\theta(k-1)\big)$$

$$\forall k > 1, P(k) = \frac{1}{\lambda}\left(P(k-1) - \frac{P(k-1)\varphi(k)\varphi^T(k)P(k-1)}{\lambda + \varphi^T(k)P(k-1)\varphi(k)}\right.$$

where $\lambda$ is a forgetting factor of between 0 and 1, P(k) is a gain matrix, and can be expressed as $P(k)\varphi(k) = K(k)$, where K(k) is the Kalman matrix gain.

To estimate the parameters Ce and Oe, the following model is for example used, in which y(k) is the timestamp $T_k$ of the received packet:

$$y(k) = T_k = Ce.t_k + Oe$$

where $t_k$ is the local reception time at the receiver of packet k.

In a case in which the transmission delay is constant, and the clocks are perfectly aligned, the packets will be emitted and received at a constant rate, and the following relation holds true:

$$\forall k, T_k - t_k = Oe$$

The parameters $\theta(k)$ and $\varphi(k)$ of the RLS algorithm are for example defined as follows:

$$\forall k, \theta(k) = \begin{bmatrix} Ce_k \\ Oe_k \end{bmatrix} \text{ and } \varphi(k) = \begin{bmatrix} t_k \\ 1 \end{bmatrix}$$

In operation 402, a difference is calculated between the timestamp $T_k$ of the received packet and an estimation of the timestamp based on previous estimates of Ce and Oe, for example based on the formula: $\boldsymbol{T_k - (Ce_{k-1}t_k + Oe_{k-1})}$.

In an operation 403, the estimate of the parameters Ce and Oe are updated using the RLS algorithm, and in particular using the following equations, which are based on the difference calculated in operation 402:

$$Ce_k = Ce_{k-1} + (P_{11}t_k + P_{12})(T_k - (Ce_{k-1}t_k + Oe_{k-1}))$$

$$Oe_k = Oe_{k-1} + (P_{21}t_k + P_{22})\big(T_k - (Ce_{k-1}t_K + Oe_{k-1})\big)$$

where P is the gain matrix, which is for example a two-by-two matrix having a top row of values $P_{11}$ and $P_{12}$, and a bottom row of values $P_{21}$ and $P_{22}$.

In an operation 404, the gain matrix is for example updated as follows:

$$P(k) = \frac{1}{\lambda}\begin{bmatrix} P_{11} - \dfrac{(P_{11}t_k + P_{21})(P_{11}t_k + P_{12})}{\alpha_k} & P_{12} - \dfrac{(P_{12}t_k + P_{22})(P_{11}t_k + P_{12})}{\alpha_k} \\ P_{21} - \dfrac{(P_{11}t_k + P_{21})(P_{21}t_k + P_{22})}{\alpha_k} & P_{22} - \dfrac{(P_{12}t_k + P_{22})(P_{21}t_k + P_{22})}{\alpha_k} \end{bmatrix}$$

where $a_k = \lambda + (P_{11}t_k + P_{21})t_k + (P_{12}t_k + P_{22})$, and $\lambda$ is a forgetting factor of between 0 and 1.

The method then for example returns to operation 401 ready for the reception of a subsequent packet.

The values of the parameters Ce and Oe, as well as of the gain matrix P, are for example initialized at the start of a given transmission of an audio and/or video stream. The value of Ce can be expected to be in the range [0.9-1.1] with a high level of confidence, as the transmission and reception clock rates should be calibrated relatively well with each other. The parameter Oe could however take any value, because the origin of the timestamps is chosen randomly by the emitter. It can therefore take several iterations in order for the value of Oe to settle to a relatively precise estimate. The parameters Ce, Oe and P are thus for example initialized as follows:

$$\theta(1) = \begin{bmatrix} 1 \\ T_1 - t_1 \end{bmatrix} and \ P(1) = \begin{bmatrix} 10^{-10} & 0 \\ 0 & 10^{-1} \end{bmatrix}$$

The forgetting factor λ is for example set to a value of between 0.8 and 0.95, such that the estimate Ce shifts as network conditions change.

Figure 5A is a graph illustrating, by dots, an example of the media time t that packets having timestamps T are received by the receiver in a case in which no congestion detection or correction is performed. A dashed curve in Figure 5A has a gradient representing the transmission clock rate estimates Re based on the reception time of the packets.

Figure 5B is a graph showing a curve representing the estimates Re of the transmission clock rate based on the packets received in the example of Figure 5A.

With reference to both Figures 5A and 5B, until a time $t_1$, the gradient of the dashed curve in Figure 5A is relatively linear. The corresponding transmission clock rate estimates, which are for example based on an estimation of the linear relationship between the time t and the received timestamps T, are also relatively stable following a few initial oscillations, and converge to a level 502 at or close to the true transmission clock rate R.

However, at the time $t_1$, network congestion occurs. The present inventors have found that network congestion causes the estimates of the transmission clock rate to tail off. Thus the gradient of the dashed curve in Figure 5A reduces significantly, and the curve in Figure 5B drops significantly below the level 502. At a time $t_2$, the router in the network at which the network congestion occurs for example drops packets, leading to a discontinuity in the timestamps received. This for example causes the transmission clock rate estimates to increase again. However, the congestion in the network is still present, and thus the gradient of the dashed curve in Figure 5A remains low after the time $t_2$, and the transmission clock rate estimates tail off again.

According to the embodiments described herein, the rate control circuit 208 of Figure 2 is for example adapted to detect when the transmission clock rate estimates Re drop significantly, for example to a level of less than a threshold TH. In some embodiments, congestion is only detected when the estimates Re fall below the threshold TH for a minimum time duration Tc, where Tc is for example a duration of between 100 ms and 10 s. In some embodiments, the threshold TH is a constant level based on a theoretical value of R. For example, the threshold TH is equal to F*R$_{theoretical}$, where R$_{theoretical}$ is a theoretical level of R, equal in one example to 8 KHz in the case of an audio stream, and F is a factor equal to less than 1, and for example equal to between 80 and 95 percent, corresponding to a factor of between 0.8 and 0.95. Alternatively, the threshold TH could be a dynamically changing threshold based on one or more previous estimates Re.

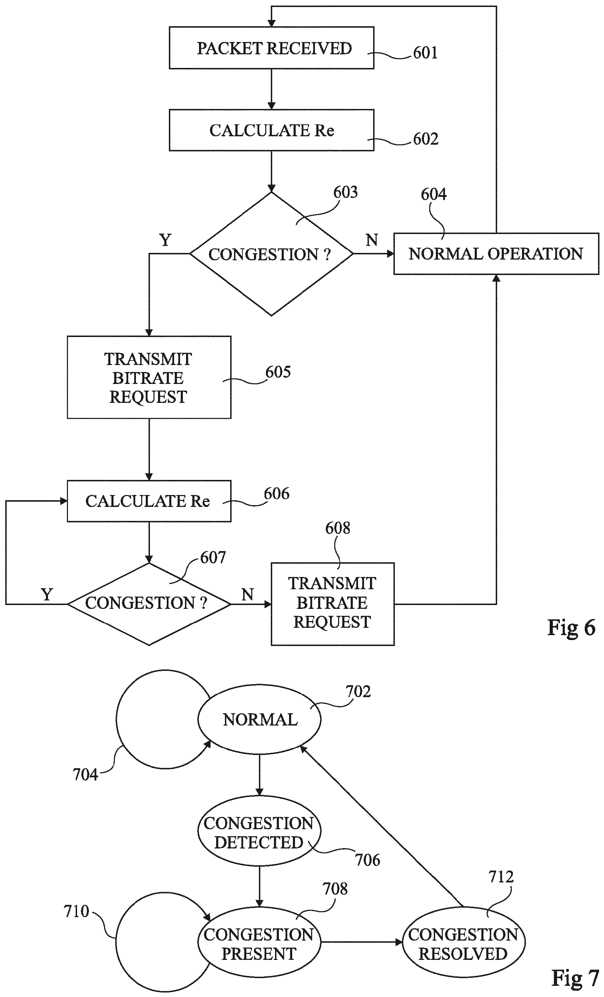

A method of detecting and correcting congestion over a network will now be described in more detail with reference to Figures 6 and 7.

Figure 6 is a flow diagram illustrating operations in a method of detecting and stopping congestion in a network.

Figure 7 is a state diagram representing states of the rate control module 208 according to an example embodiment.

With reference to both Figures 6 and 7, initially, the rate control module 208 is for example in a normal state (NORMAL) 702. In an operation 601, a packet is for example received, which for example triggers a congestion detection process. Alternatively, the congestion detection process could be triggered in another fashion, for example periodically.

In an operation 602, an estimate Re of the transmission clock rate is for example calculated as described above, based for example on timing data associated with one or more received packets.

In an operation 603, it is determined whether the estimated transmission clock rate Re indicates the presence of congestion. For example, congestion is detected if the following condition holds for more than a minimum duration Tc:

$$Re \leq F * R_{theoretical}$$

where, as mentioned above, F is a factor for example equal to between 0.80 and 0.95, and R$_{theoretical}$ is the theoretical transmission clock rate.

If in operation 603 congestion is not detected, the normal operation continues, as represented by a box 604 in Figure 6, and by an arrow 704 in Figure 7.

If however congestion is found to be present in operation 603, a congestion detected state (CONGESTION DETECTED) 706 of Figure 7 is entered, and in a subsequent operation 605 of Figure 6, the bitrate request signal REQ is for example transmitted to the transmitting circuit 102. For example, as indicated above, the bitrate request is based on the measured bandwidth Be of the communications channel between the transmitter 102 and receiver 104, which for example provides an estimate of the available bandwidth. For example, the bandwidth Be is measured by calculating the bitrate of the media stream received by the receiver 104. The bitrate request is for example for a bitrate corresponding to between 15 and 40 percent less that the measured bandwidth Be, and for example at around 30 percent less than the measured bandwidth Be.

A congestion present state (CONGESTION PRESENT) 708 of Figure 7 is then for example entered, and in this state, new congestion detection operations are for example performed. In particular, in an operation 606, a new estimate Re of the transmission clock rate is for example calculated, and in an operation 607, it is determined whether congestion is present, for example based on the same test as applied in operation 603. This is represented by an arrow 710 in Figure 7.

The operations 606 and 607 are for example repeated until congestion is no longer detected. For example, congestion is no longer considered to be present if the value of Re is equal to or exceeds the threshold TH, for example if:

$$Re \geq F * R_{theoretical}$$

The state then for example transitions to a congestion resolved state (CONGESTION RESOLVED) 712 in Figure 7, and in an operation 608, a new bitrate request is for example transmitted to the transmitter 102 to increase the transmission bitrate with respect to the requested reduced bandwidth. For example, the new bitrate request is based on the previously measured bandwidth Be, and is for example between 2 and 10 percent lower than the measured bandwidth Be, and for example 5 percent lower. The state then for example transitions back to the normal state 702 of Figure 7, represented by the box 604 in Figure 6.

An advantage of initially requesting a large reduction in the transmission bitrate when congestion is detected is that this permits the congested router to recover by sending the pending packets that were previously buffered and which are causing the congestion. Once the receiver observes that the congestion has been resolved, the transmission bitrate can be increased to a level closer to available bandwidth estimated when congestion occurred.

An advantage of the embodiments described herein is that, by using transmission clock rate estimates to detect the presence of network congestion, an effective and early warning system can be provided, permitting the congestion problem to be addressed before a high number of packets is dropped and the media stream quality becomes degraded.

## Claims

1. A method for detecting congestion in a packet-switched network (106) comprising:

   estimating, by a receiver (104), a transmission clock rate, $R_e$, of one or more packets of a media stream received by the receiver, each packet comprising a timestamp generated based on the transmission clock rate, R, wherein the transmission clock rate, $R_e$, is estimated based on the timing of a plurality n of received packets and the timestamps associated with said n packets and estimating the transmission clock rate, $R_e$, comprises estimating a clock rate ratio, $C_e$, between the transmission clock rate and the clock rate at the receiver based on the following model of the reception time $t_k$ of a packet k:

   $$T_k = Ce.t_k + Oe$$

   where $T_k$ is the timestamp, and Oe is an estimate of an origin value of the timestamps, and the reception time $t_k$ is predicted using an adaptive filtering technique based on a recursive least squares, RLS, algorithm or on a Kalman filter algorithm;
   comparing the estimated transmission clock rate, $R_e$, with a threshold, TH; and
   detecting congestion in the network based on said comparison.

2. The method of claim 1, wherein estimating the transmission clock rate is performed in response to the reception of each packet of the media stream received by the receiver (104).

3. The method of claim 1 or 2, wherein the threshold, TH, is a fixed level.

4. The method of claim 1 or 2, wherein the threshold, TH, is calculated based on an average of a plurality of previous estimates, $R_e$,) of the transmission clock rate.

5. The method of any of claims 1 to 4, further comprising, in response to detecting congestion:

   estimating available bandwidth, $B_e$, based on at least a detected bitrate of the media stream; and
   transmitting a first bitrate limitation request, REQ, to a transmitter (102) transmitting the media stream to request that the transmission bitrate is reduced.

6. The method of claim 5, wherein the first bitrate limitation request is to reduce the bitrate to a level of between 15 and 40 percent lower than the estimated available bandwidth, $B_e$.

7. The method of claim 5 or 6, further comprising:

calculating, by the receiver (104), a new estimate of the transmission clock rate based on one or more further packets received after transmission of the first bitrate limitation request; and
determining from the new estimate that the network is no longer congested, and in response transmitting to the transmitter (102) a second bitrate limitation request.

8. The method of claim 7, wherein the second bitrate limitation request is to increase the bitrate to a level of between 2 and 10 percent lower than the estimated available bandwidth, $B_e$,).

9. A receiver for receiving a media stream transmitted over a packet-switched network (106), the receiver being configured to:

estimate a transmission clock rate, $R_e$, of one or more packets of a media stream received by the receiver, each packet comprising a timestamp generated based on the transmission clock rate (R), wherein the transmission clock rate, $R_e$, is estimated based on the timing of a plurality n of received packets and the timestamps associated with said n packets and the receiver is configured to estimate the transmission clock rate, $R_e$, by estimating a clock rate ratio, $C_e$, between the transmission clock rate and the clock rate at the receiver based on the following model of the reception time $t_k$ of a packet k:

$$T_k = Ce.t_k + Oe$$

where $T_k$ is the timestamp, and Oe is an estimate of an origin value of the timestamps, and the reception time $t_k$ is predicted using an adaptive filtering technique based on a recursive least squares, RLS, algorithm or on a Kalman filter algorithm;
compare the estimated transmission clock rate, $R_e$, with a threshold, TH; and
detect congestion in the network based on said comparison.

**Patentansprüche**

1. Ein Verfahren zur Erkennung von Überlastung in einem Paket-geschalteten Netzwerk (106), wobei das Verfahren Folgendes aufweist:

Schätzen, durch einen Empfänger (104), einer Übertragungstaktrate, $R_e$, von einem oder mehreren Paketen eines Medienstroms, der durch den Empfänger empfangen wird, wobei jedes Paket einen Zeitstempel aufweist, der basierend auf der Übertragungstaktrate, R, erzeugt wird, wobei die Übertragungstaktrate, $R_e$, geschätzt wird, basierend auf dem Timing einer Vielzahl n von empfangenen Paketen und den Zeitstempeln, die den n Paketen zugeordnet sind, und Schätzen der Übertragungstaktrate, $R_e$, Schätzen eines Taktratenverhältnisses, $C_e$, aufweist zwischen der Übertragungstaktrate und der Taktrate am Empfänger, basierend auf dem folgenden Modell der Empfangszeit $t_k$ eines Pakets k:

$$T_k = Ce.t_k + Oe$$

wobei $T_k$ der Zeitstempel und Oe eine Schätzung eines Ursprungswerts der Zeitstempel ist und die Empfangszeit $t_k$ vorhergesagt wird unter Verwendung einer adaptiven Filtertechnik basierend auf einem Algorithmus der rekursiven kleinsten Quadrate, RLS, oder auf einem Kalman-Filter-Algorithmus;
Vergleichen der geschätzten Übertragungstaktrate, $R_e$, mit einem Schwellenwert, TH; und
Detektieren einer Überlastung des Netzes basierend auf diesem Vergleich.

2. Das Verfahren nach Anspruch 1, wobei die Schätzung der Übertragungstaktrate durchgeführt wird als Reaktion auf den Empfang jedes Pakets des Medienstroms, das von dem Empfänger (104) empfangen wird.

3. Das Verfahren nach Anspruch 1 oder 2, wobei der Schwellenwert, TH, ein fester Pegel ist.

4. Das Verfahren nach Anspruch 1 oder 2, wobei der Schwellenwert, TH, auf der Grundlage eines Durchschnitts einer Vielzahl von vorherigen Schätzungen, $R_e$, der Übertragungstaktrate berechnet wird.

5. Das Verfahren nach einem der Ansprüche 1 bis 4, das ferner als Reaktion auf Detektieren einer Überlastung Folgendes aufweist:

Schätzen verfügbarer Bandbreite, $B_e$, basierend auf wenigstens einer erfassten Bitrate des Medienstroms; und Senden einer ersten Bitraten-Begrenzungsanforderung, REQ, an einen Sender (102), der den Medienstrom sendet, um anzufordern, dass die Übertragungsbitrate reduziert wird.

6. Das Verfahren nach Anspruch 5, wobei die erste Bitraten-Begrenzungsanforderung darin besteht, die Bitrate auf ein Niveau zu reduzieren, das zwischen 15 und 40 Prozent niedriger ist als die geschätzte verfügbare Bandbreite, $B_e$.

7. Das Verfahren nach Anspruch 5 oder 6, das ferner Folgendes aufweist:

Berechnen, durch den Empfänger (104), einer neuen Schätzung der Übertragungstaktrate basierend auf einem oder mehreren weiteren Paketen, die nach der Übertragung der ersten Bitraten-Begrenzungsanforderung empfangen wurden; und
Bestimmen aus der neuen Schätzung, dass das Netzwerk nicht mehr überlastet ist, und in Reaktion darauf Übertragen einer zweiten Bitraten-Begrenzungsanforderung an den Sender (102).

8. Das Verfahren nach Anspruch 7, wobei die zweite Bitraten-Begrenzungsanforderung dazu dient, die Bitrate auf ein Niveau zu erhöhen, das zwischen 2 und 10 Prozent unter der geschätzten verfügbaren Bandbreite, $B_e$, liegt.

9. Ein Empfänger zum Empfangen eines Medienstroms, der über ein Paketgeschaltetes Netzwerk (106) übertragen wird, wobei der Empfänger konfiguriert ist zum:

Schätzen einer Übertragungstaktrate, $R_e$, von einem oder mehreren Paketen eines Medienstroms, der von dem Empfänger empfangen wird, wobei jedes Paket einen Zeitstempel aufweist, der basierend auf der Übertragungstaktrate (R) generiert wird, wobei die Übertragungstaktrate, $R_e$, geschätzt wird, basierend auf dem Timing einer Vielzahl n von empfangenen Paketen und den Zeitstempeln, die mit den n Paketen assoziiert sind, und der Empfänger konfiguriert ist, die Übertragungstaktrate, $R_e$, zu schätzen, indem ein Taktratenverhältnis, $C_e$, zwischen der Übertragungstaktrate und der Taktrate an dem Empfänger geschätzt wird, basierend auf dem folgenden Modell der Empfangszeit $t_k$ eines Pakets k:

$$T_k = Ce.\,t_k + Oe$$

wobei $T_k$ der Zeitstempel und Oe eine Schätzung eines Ursprungswerts der Zeitstempel ist und die Empfangszeit $t_k$ vorhergesagt wird unter Verwendung einer adaptiven Filtertechnik auf der Grundlage eines Algorithmus der rekursiven kleinsten Quadrate, RLS, oder eines Kalman-Filter-Algorithmus;
Vergleichen der geschätzten Übertragungstaktrate, $R_e$, mit einem Schwellenwert, TH; und
Detektieren einer Überlastung des Netzes basierend auf diesem Vergleich.

**Revendications**

1. Procédé de détection de congestion dans un réseau à commutation par paquets (106), comprenant :

l'estimation, par un récepteur (104), d'une cadence d'horloge de transmission, $R_e$, d'un ou de plusieurs paquets du flux d'information reçu par le récepteur, chaque paquet comprenant un repère temporel généré sur la base de la cadence d'horloge de transmission, R, dans lequel la cadence d'horloge de transmission, $R_e$, est estimée sur la base de la synchronisation d'une pluralité n de paquets reçus et de repères temporels associés auxdits n paquets et l'estimation de la cadence d'horloge de transmission, $R_e$, comprend l'estimation d'un rapport de cadences d'horloge, $C_e$, entre la cadence d'horloge de transmission et la cadence d'horloge au niveau du récepteur sur la base du modèle suivant du temps de réception $t_k$ d'un paquet k :

$$T_k = Ce.t_k + Oe$$

où $T_k$ est le repère temporel, et Oe est une estimation d'une valeur d'origine des repères temporels, et le temps de réception $t_k$ est prédit en utilisant une technique de filtrage adaptatif sur la base d'un algorithme des moindres carrés récursifs, RLS, ou un algorithme de filtre de Kalman ;
la comparaison de la cadence d'horloge de transmission estimée, $R_e$, à un seuil, TH ; et
la détection d'une congestion dans le réseau sur la base de ladite comparaison.

2. Procédé selon la revendication 1, dans lequel l'estimation de la cadence d'horloge de transmission est effectuée en réponse à la réception de chaque paquet du flux d'information reçu par le récepteur (104).

3. Procédé selon la revendication 1 ou 2, dans lequel le seuil, TH, est un niveau fixé.

4. Procédé selon la revendication 1 ou 2, dans lequel le seuil, TH, est calculé sur la base d'une moyenne d'une pluralité d'anciennes estimations, $R_e$, de la cadence d'horloge de transmission.

5. Procédé selon l'une quelconque des revendications 1 à 4, comprenant en outre, en réponse à la détection d'une congestion :

l'estimation de la largeur de bande disponible, $B_e$, sur la base d'au moins une des cadences binaires détectées du flux d'information ; et
l'émission d'une première requête de limitation de cadence binaire, REQ, vers un émetteur (102) transmettant le flux d'information pour faire la requête d'une réduction de la cadence binaire de transmission.

6. Procédé selon la revendication 5, dans lequel la première requête de limitation de cadence binaire est de réduire la cadence binaire jusqu'à un niveau compris entre 15 et 40 % de moins que la largeur de bande disponible estimée, $B_e$.

7. Procédé selon la revendication 5 ou 6, comprenant en outre :

le calcul, par le récepteur (104), d'une nouvelle estimation de la cadence d'horloge de transmission sur la base d'un ou de plusieurs autres paquets ultérieurs reçus après la transmission de la première requête de limitation de cadence binaire ; et
la détermination à partir de la nouvelle estimation que le réseau n'est plus congestionné, et la transmission en réponse vers l'émetteur (102) d'une deuxième requête de limitation de cadence binaire.

8. Procédé selon la revendication 7, dans lequel la deuxième requête de limitation de cadence binaire est d'augmenter la cadence binaire à un niveau compris entre 2 et 10 % de moins que la largeur de bande disponible estimée, $B_e$.

9. Récepteur recevant un flux d'information transmis par un réseau à commutation par paquets (106), le récepteur étant configuré pour :

estimer une cadence d'horloge de transmission, $R_e$, d'un ou de plusieurs paquets d'un flux d'information reçu par le récepteur, chaque paquet comprenant un repère temporel généré sur la base de la cadence d'horloge de transmission (R), dans lequel la cadence d'horloge de transmission, $R_e$, est estimé sur la base de la synchronisation d'une pluralité n de paquets reçus et de repères temporels associés auxdits n paquets et le récepteur est configuré pour estimer la cadence d'horloge de transmission, $R_e$, en estimant un rapport de cadences d'horloge, $C_e$, entre la cadence d'horloge de transmission et la cadence d'horloge au niveau du récepteur sur la base du modèle suivant du temps de réception $t_k$ d'un paquet k :

$$T_k = Ce.\ t_k + Oe$$

où $T_k$ est le repère temporel, et Oe est une estimation d'une valeur d'origine des repères temporels, et le temps de réception $t_k$ est prédit en utilisant une technique de filtrage adaptatif sur la base d'un algorithme des moindres carrés récursifs, RLS, ou un algorithme de filtre de Kalman ;
comparer la cadence d'horloge de transmission estimée, $R_e$, à un seuil, TH ; et
la détection d'une congestion dans le réseau sur la base de ladite comparaison.

Fig 1

Fig 2

Fig 3

401

NEW
PACKET
RECEIVED ?

N

Y

COMPUTE DIFFERENCE BETWEEN
MEASURED $R_k$ AND ESTIMATED $R_k'$

402

UPDATE ESTIMATES

403

UPDATE GAIN MATRIX

404

**Fig 4**

**Fig 5A**

**Fig 5B**

PACKET RECEIVED —601

CALCULATE Re —602

603

Y ← CONGESTION ? → N

604
NORMAL OPERATION

TRANSMIT
BITRATE
REQUEST —605

CALCULATE Re —606

607

Y ← CONGESTION ? → N

608
TRANSMIT
BITRATE
REQUEST

Fig 6

702
NORMAL

704

CONGESTION
DETECTED —706

710

CONGESTION
PRESENT —708

CONGESTION
RESOLVED —712

Fig 7

**EP 3 327 996 B1**

## REFERENCES CITED IN THE DESCRIPTION

**Patent documents cited in the description**

- FR 2899049

- WO 2012074442 A

**Non-patent literature cited in the description**

- **H. SCHULZRINNE et al.** *RTP: A Transport Protocol for Real-Time Applications*, 2003